# FASCICULE DE BREVET EUROPEEN

(11) **EP 1 765 574 B1**
(45) Date de publication et mention de la délivrance du brevet: **07.08.2013**
(21) Numéro de dépôt: 05778781.4
(22) Date de dépôt: 17.06.2005
(51) Int. Cl.: B29C 49/58, B29C 49/06, B29C 49/12

(54) **INSTALLATION DE FABRICATION, PAR SOUFFLAGE, DE RECIPIENTS EN MATERIAU THERMOPLASTIQUE**
VORRICHTUNG ZUM BLASFORMEN VON THERMOPLASTISCHEN BEHÄLTERN
DEVICE FOR BLOWING THERMOPLASTIC CONTAINERS

(30) Priorité: 23.06.2004 FR 0406844
(43) Date de publication de la demande: 28.03.2007
(73) Titulaire: SIDEL PARTICIPATIONS, 76930 Octeville-sur-Mer (FR)
(72) Inventeur: Lemaistre, Eric, F-76930 Octeville-Sur-Mer (FR)
(74) Mandataire: Cabinet Plasseraud
(86) Numéro de dépôt international: PCT/FR2005/001531
(87) Numéro de publication internationale: WO 2006/008380

(56) Documents cités:
- EP-A1- 0 655 313
- WO-A1-02/34500
- DE-A1- 2 657 670
- DE-A1- 10 231 345
- DE-A1- 19 543 440
- US-B1- 6 464 486

## Description

La présente invention concerne d'une manière générale le domaine de la fabrication des récipients en matériau thermoplastique, tel que le PET ou le PEN, par un processus de soufflage ou d'étirage-soufflage à partir d'une ébauche (préforme ou récipient intermédiaire), et elle concerne plus précisément des perfectionnements apportés aux installations de fabrication de récipients en matériau thermoplastique par soufflage, à l'aide d'un fluide sous pression, d'ébauches dont le corps est enfermé dans un moule de soufflage, lesdites installations comportant une tuyère comprenant une extrémité conformée pour être mise en relation fonctionnelle étanche avec le col d'une ébauche et comportant plusieurs électrovannes pour la mise en liaison sélective de ladite tuyère avec par exemple respectivement une source de fluide sous moyenne pression pour le présoufflage, une source de fluide sous haute pression pour le soufflage et un échappement pour évacuer le fluide de présoufflage/soufflage.

De façon connue, la tuyère est agencée pour être mobile, en tout ou partie, axialement au-dessus du moule de soufflage entre une position haute ou position relevée dans laquelle la tuyère n'est pas fonctionnelle (ouverture et fermeture du moule permettant le chargement d'une ébauche et le déchargement du récipient moulé) et une position basse ou position de soufflage dans laquelle l'extrémité de la tuyère coopère de façon étanche soit avec le col de l'ébauche, soit avec la face du moule au-dessus de laquelle fait saillie le col de l'ébauche et dans laquelle la tuyère est fonctionnelle.

On connaît des installations de soufflage dans lesquelles l'extrémité de la tuyère, en position fonctionnelle, coopère positivement avec le col de l'ébauche et soit est aboutée de façon étanche contre le buvant (bord) du col de l'ébauche, soit est emmanchée de façon étanche dans ou sur le col de l'ébauche.

On connaît également des installations de soufflage dans lesquelles l'extrémité de la tuyère est conformée en cloche plus grande que le col de l'ébauche et coiffe celui-ci en prenant appui frontalement, de façon étanche, contre la face du moule sur laquelle le col de l'ébauche fait saillie (voir par exemple le document FR 2 764 544).

Une séquence de soufflage comprend normalement une phase de présoufflage de l'ébauche à l'aide d'un fluide (en général de l'air) sous une pression moyenne (par exemple 7 x 10⁵ Pa), puis une phase de soufflage proprement dite sous une pression élevée (par exemple 40 x 10⁵ Pa) accompagnée généralement d'un étirage axial mécanique au moyen d'une tige d'étirage, et enfin une phase d'échappement avec évacuation de l'air de présoufflage/soufflage. Pour ces diverses phases, on commande séquentiellement trois électrovannes respectives qui, d'un côté, sont raccordées respectivement à une source de fluide sous moyenne pression, une source de fluide sous haute pression et un échappement et qui, de l'autre côté, sont raccordées à la tuyère.

Une installation de soufflage du type considéré fait une consommation très importante de fluide sous pression, qu'il soit sous moyenne ou haute pression. La production en permanence et en grande quantité de fluide (air) sous pression entraîne une très forte consommation d'énergie électrique pour le fonctionnement du ou des compresseurs. De ce fait, il existe une demande permanente et pressante de la part des utilisateurs de ces installations de soufflage pour une réduction aussi forte que possible de la quantité de fluide sous pression utilisée, de manière à réduire la consommation d'énergie électrique.

Il faut comprendre que le seul volume utile pour l'opération de soufflage est le volume du récipient amené dans sa forme finale contre les parois de la cavité de moulage du moule, autrement dit sensiblement le volume de la cavité de moulage. Par contre, tous les volumes situés entre la sortie de l'électrovanne de présoufflage ou de soufflage et le col du récipient sont des volumes non utiles à proprement parler pour la déformation de l'ébauche et sont donc des volumes morts. Or, à chaque phase de présoufflage et de soufflage d'une ébauche, ces volumes morts sont remplis de fluide sous pression au même titre que le volume utile, ce qui implique une production de fluide sous pression sensiblement supérieure au besoin réel. Or les volumes morts sont d'un ordre de grandeur non négligeable par rapport aux volumes utiles et toute réduction de ces volumes morts s'avère bénéfique en terme de réduction possible de la puissance du compresseur de fluide et donc de son prix, et en terme de réduction de l'énergie électrique nécessitée par le fonctionnement du compresseur.

Dans une première conception de l'installation de soufflage, les électrovannes étaient regroupées sur une embase fixe montée sur le bâti à distance de la tuyère. Un tube flexible raccordait la sortie commune des électrovannes à l'orifice de raccordement de la tuyère (par exemple tube 23 à la figure 1 du document précité FR 2 764 544). Dans cette conception, le volume mort était très important, notamment en raison de la présence du tube flexible de raccordement à distance.

Dans une conception ultérieure, le volume mort a été réduit de façon notable en éliminant le tube flexible de raccordement et en montant le bloc d'électrovannes directement sur le corps de la tuyère, à l'emplacement du raccord du tube 23 à la figure 1 du document FR 2 764 544. Toutefois, dans cette conception qui perdure actuellement, la juxtaposition des deux corps respectivement du bloc d'électrovannes et de la tuyère impose encore des passages de fluide d'une longueur conséquente, ce qui se traduit par un volume mort encore trop important en terme de consommation. De ce fait, les utilisateurs maintiennent leur revendication pour une consommation toujours moindre en fluide sous pression, de manière à réduire encore la consommation en énergie électrique.

En outre la présence des blocs d'électrovannes situés à distance de la tuyère ou juxtaposés à celle-ci conduit à un ensemble lourd et encombrant.

Le document WO 02/34500 décrit une installation comme exposé dans le préambule de la revendication 1.

L'invention a donc pour but de tenter de satisfaire, dans toute la mesure du possible, ces exigences permanentes des utilisateurs et de proposer un agencement perfectionné d'installation de soufflage qui conduise à une réduction très sensible des volumes morts dans le circuit d'amenée du fluide sous pression à l'ébauche disposée dans la cavité de moulage du moule et qui puisse conduire également à des ensembles structurels moins lourds et plus compacts.

A ces fins, une installation de soufflage telle qu'exposée au préambule se caractérise, étant agencée conformément à l'invention, en ce qu'un corps associé mécaniquement à la tuyère incorpore au moins un logement qui est propre à abriter respectivement une électrovanne et qui est sélectivement en communication avec la tuyère.

Grâce à cette structure intégrée, on rapproche notablement la sortie de l'électrovanne de l'extrémité de la tuyère, et par conséquent on réduit notablement le volume mort conformément au but recherché principalement.

On notera qu'un tel agencement intégré offre également des avantages supplémentaires : l'élimination de l'embase de montage des électrovannes et éventuellement du flexible de raccordement se traduit par un gain de coût (agencement plus économique), un gain de place (possibilité d'un agencement plus compact et/ou place disponible pour le montage d'autres composants) et un gain de poids (réduction de l'inertie sur une structure tournante du type carrousel).

Dans un mode de réalisation préféré concernant notamment les tuyères à coopération positive avec le col des ébauches, c'est le corps supportant la tuyère qui est pourvu du susdit logement. Toutefois, dans un autre mode de réalisation possible qui concerne les installations dans lesquelles la tuyère est pourvue d'une partie terminale en cloche, c'est le corps de ladite cloche qui est agencé avec ledit logement. Dans des exemples de mise en oeuvre, on peut prévoir que le logement s'étende parallèlement à l'axe de la tuyère à partir de la face supérieure du corps, ou bien que le logement s'étende radialement à partir de la tuyère, ou bien encore que le logements s'étende transversalement à la tuyère, en étant décalé latéralement par rapport à un alésage abritant celle-ci.

Dans une première mise en oeuvre, on peut faire en sorte que chaque logement soit usiné de manière à former la chambre respective du noyau mobile de l'électrovanne ; autrement dit, on usine la partie respective du corps de manière non seulement à y former le logement, mais également de manière que ce logement soit propre à recevoir directement le noyau mobile de l'électrovanne. Cette solution offre l'avantage d'une réduction maximale du nombre des pièces composantes et peut procurer un gain intéressant sur les volumes morts ; toutefois, cette structure à intégration maximale se révèle peu pratique pour l'entretien, car le démontage est long et/ou, en cas de problème grave sur la chambre de l'électrovanne, c'est l'ensemble de la partie correspondante du corps qu'il faut remplacer. Le document DE-A1-102 31 345 décrit un mode de réalisation du type celui qui vient d'être évoqué, des vannes remplaçant toutefois des electrovannes.

Par conséquent, pallier aux inconvénients précités, l'invention consiste en ce que chaque logement soit conformé pour recevoir une électrovanne-cartouche respective, c'est-à-dire une structure d'électrovanne comportant une chemise définissant une chambre abritant le noyau mobile. L'entretien s'effectue alors par remplacement pur et simple de la cartouche, une telle opération étant simple et rapide à réaliser.

Il est toutefois préférable, toujours aux fins de faciliter la maintenance, que le dispositif de pilotage de l'électrovanne soit monté extérieurement au logement.

Dans une version intéressante de l'installation de l'invention, on prévoit une électrovanne d'échappement et qu'à cette électrovanne d'échappement soit associée un dispositif faisant office de silencieux ; le dispositif de pilotage de cette électrovanne d'échappement peut alors être monté à l'extrémité dudit dispositif de silencieux, ou éventuellement à l'intérieur dudit dispositif conformé en chambre tubulaire.

Enfin, en tant que de besoin pour économiser sur le poste de production de fluide sous pression, on peut prévoir de mettre en oeuvre deux électrovannes dans le circuit d'échappement et de pourvoir le corps de tuyère avec deux logements pour respectivement ces deux électrovannes, l'une de ces électrovannes étant associée à un circuit de recyclage ou de réutilisation d'air (par exemple en étant dirigé vers une source à pression moindre) et l'autre électrovanne servant à parachever la phase d'évacuation vers l'atmosphère. Dans un tel cas, c'est cette dernière électrovanne qui serait associée au dispositif de silencieux mentionné plus haut.

Egalement, toujours dans le but de réduire au maximum les volumes mort, on peut prévoir qu'au moins les électrovannes de présoufflage et de soufflage et les logements respectifs de celles-ci sont agencés de manière telle qu'en position de fermeture les clapets respectifs desdites électrovannes ont leurs faces frontales respectives qui affleurent la paroi intérieure de la tuyère.

Pour fixer les idées, dans un exemple typique où trois électrovannes sont installées, le volume mort peut, par mise en oeuvre des dispositions de l'invention, être ramené à un ordre de grandeur de 18,5 cm³, contre environ 187 cm³ dans un agencement actuel, soit un gain considérable de l'ordre de 168 cm³.

L'invention sera mieux comprise à la lecture de la description détaillée qui suit de certains modes de réalisation préférés donnés à titre purement illustratif et nullement limitatif. Dans cette description, on se réfère aux dessins annexés sur lesquels :
- la figure 1 est une vue très schématique, en perspective et de côté, illustrant les dispositions principales d'une installation de soufflage agencée conformément à l'invention ;
- les figures 2A et 2B sont des vues en coupe transversale, respectivement décalées de 90° l'une par rapport à l'autre, d'un exemple concret de réalisation d'une installation de soufflage conforme à l'invention, avec mise en oeuvre d'une variante des dispositions de la figure 1 ;
- la figure 2C est une vue analogue à celle de la figure 2A, avec la tuyère abaissée sur l'ébauche à souffler et prête pour le processus de soufflage;
- la figure 3 est une vue de dessus, en coupe, d'un exemple concret de réalisation d'une installation de soufflage conforme à l'invention, illustrant une variante de la tuyère des figures 2A-2C ;
- la figure 4 est une vue très schématique et simplifiée, en perspective et de côté, illustrant une autre variante de mise en oeuvre des dispositions de l'invention ; et
- la figure 5 est une vue partielle illustrant une variante de réalisation des dispositions montrées à la figure 2A.

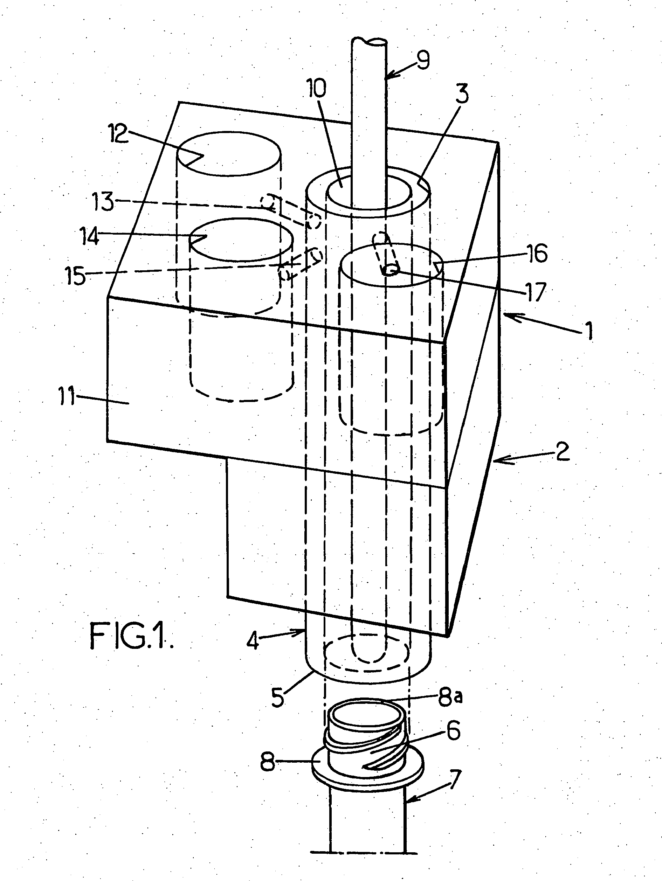

La figure 1, à laquelle on se réfère tout d'abord, montre de façon très schématique une structure simplifiée d'installation de soufflage mettant en oeuvre les dispositions principales de l'invention appliquées à un dispositif pourvu de trois électrovannes (respectivement présoufflage, soufflage, échappement). L'installation de soufflage, désignée dans son ensemble par la référence 1, comprend un corps 2 présentant un alésage 3 axial dans lequel est déplaçable, sous l'action de moyens de commande (non montrés) généralement pneumatiques, un élément mobile ou tuyère 4 mobile en forme de tige tubulaire dont une partie (non visible) peut être agencée en forme de piston. Pour fixer les idées, l'agencement mutuel du corps 2 et de la tuyère 4 mobile peut par exemple être du type illustré à la figure 1 du document FR 2 764 544. A son extrémité 5 inférieure, la tuyère 4 mobile est conformée de toute manière souhaitée pour pouvoir être mise en relation fonctionnelle étanche avec le col 6 ou goulot d'une ébauche 7 de récipient (ici montrée sous forme d'une préforme); dans l'exemple illustré, l'extrémité 5 inférieure est agencée, lorsque la tuyère 4 mobile est abaissée, pour coiffer de façon étanche le col 6 de l'ébauche 7 et venir en appui contre la collerette 8 située à la base dudit col ; l'extrémité 5 inférieure pourrait également être agencée pour venir en appui étanche contre le buvant ou bord 8a du col 6, ou bien encore être conformée en cloche entourant à distance le col 6 et en appui étanche contre la face du moule hors de laquelle le col 6 et la collerette 8 font saillie.

D'une façon classique, la tuyère 4 mobile en forme de tige tubulaire entoure une tige d'élongation 9 qui lui est coaxiale et qui est elle-même déplaçable axialement, au cours du soufflage, pour entraîner mécaniquement le fond de l'ébauche 7, selon une technique connue. La tige d'élongation 9 est maintenue en position coaxiale par des organes de guidage non représentés sur cette figure. Le diamètre de la tige d'élongation 9 est inférieur à celui de la face intérieure de la tuyère 4 mobile de manière à définir un passage annulaire 10 axial destiné à l'amenée du fluide de présoufflage et du fluide de soufflage et à l'évacuation de ce fluide en fin du processus de moulage.

Pour la commande d'amenée du fluide de présoufflage/soufflage et d'évacuation, on prévoit au moins trois électrovannes respectives, pour la mise en relation du passage annulaire 10 avec respectivement une source de fluide sous moyenne pression (typiquement 7 x 10⁵ Pa) pour le présoufflage, une source de fluide sous haute pression (typiquement 40 x 10⁵ Pa) pour le soufflage et un échappement pour évacuer le fluide de présoufflage/soufflage.

Dans les agencements connus actuellement, les électrovannes étaient disposées à l'extérieur du corps 2, soit à distance de celui-ci (document FR 2 764 544), soit plaquées contre une face externe de celui-ci.

Conformément à l'invention, ces électrovannes sont incorporées dans le corps 2. Comme illustré schématiquement à la figure 1, la partie supérieure 11 du corps 2 est réalisée sous forme d'une pièce plus volumineuse qu'antérieurement et au moins trois logements y sont pratiqués pour abriter respectivement les trois électrovannes, à savoir :
- un logement 12 destiné à abriter l'électrovanne de présoufflage, et mis en communication avec le passage annulaire 10 par un conduit radial 13;
- un logement 14 destiné à abriter l'électrovanne de soufflage et mis en communication avec le passage annulaire 10 par un conduit radial 15 ;
- un logement 16 destiné à abriter l'électrovanne d'échappement et mis en communication avec le passage annulaire 10 par un conduit radial 17.

Dans l'illustration simplifiée donnée à la figure 1, seuls les logements des électrovannes sont représentés, tandis que les électrovannes elles-mêmes ne sont pas montrées (des exemples concrets en seront donnés plus loin).

Dans l'exemple de la figure 1, les logements 12, 14 et 16 sont schématisés sous forme de logements cylindriques de révolution d'axes sensiblement parallèles à l'axe de l'alésage 3 précité. Toutefois d'autres dispositions sont possibles et des exemples en seront donnés plus loin.

Pour qu'en fin de soufflage le fluide de soufflage soit évacué très rapidement et que le moule puisse être ouvert aussi vite que possible en vue d'une cadence élevée de fonctionnement, il est souhaitable que le conduit d'échappement soit surdimensionné comme illustré pour le conduit radial 17. Après le soufflage, le fluide qui est évacué est encore sous une pression significative et peut être récupéré pour être dirigé vers une source de fluide sous pression intermédiaire (par exemple pour le présoufflage). Dans ce cas, on prévoit un quatrième logement dans le corps 2 pour recevoir une électrovanne de recyclage (laquelle est actionnée après le soufflage, tandis que l'électrovanne d'échappement est actionnée en dernier lieu pour l'élimination du résidu de fluide de soufflage).

On pourrait prévoir que chaque logement 12, 14, 16 soit usiné de manière à définir, directement dans le corps 2, la chambre de l'électrovanne propre à abriter le noyau mobile formant clapet d'ouverture/fermeture. Une telle solution offre certes l'avantage d'une simplification structurelle optimale. Cette solution peut présenter un avantage supplémentaire dont il sera question plus loin. Toutefois, cette solution entraîne également des contraintes pour l'entretien : en cas de problème avec une électrovanne, c'est l'ensemble de la partie concernée du corps 2, voire le corps 2 en entier, qu'il faut démonter, voire remplacer. Il en résulte un temps d'entretien allongé et des coûts accrus.

Pour éviter ces sujétions, il peut donc s'avérer plus intéressant en général d'avoir recours à des électrovannes-cartouches se présentant sous forme d'un module propre à être mis en place dans un logement respectif ou à en être retiré sans difficulté et en un temps très court. Cette solution est donc particulièrement économique pour l'entretien.

On notera que les logements 12, 14, 16 sont agencés pour recevoir l'électrovanne respective proprement dite (c'est-à-dire la chambre abritant le noyau mobile formant clapet et le siège pour celui-ci), le capot de l'électrovanne restant en appui externe contre la face du moule, tandis que le dispositif de pilotage de l'électrovanne reste extérieur au logement : un exemple concret d'agencement sera indiqué plus loin.

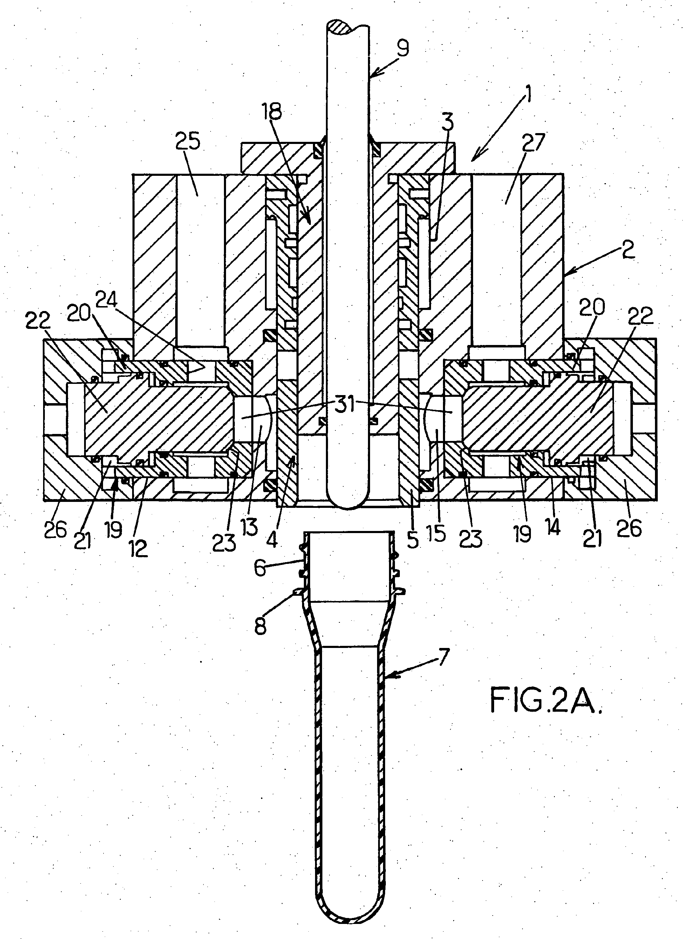

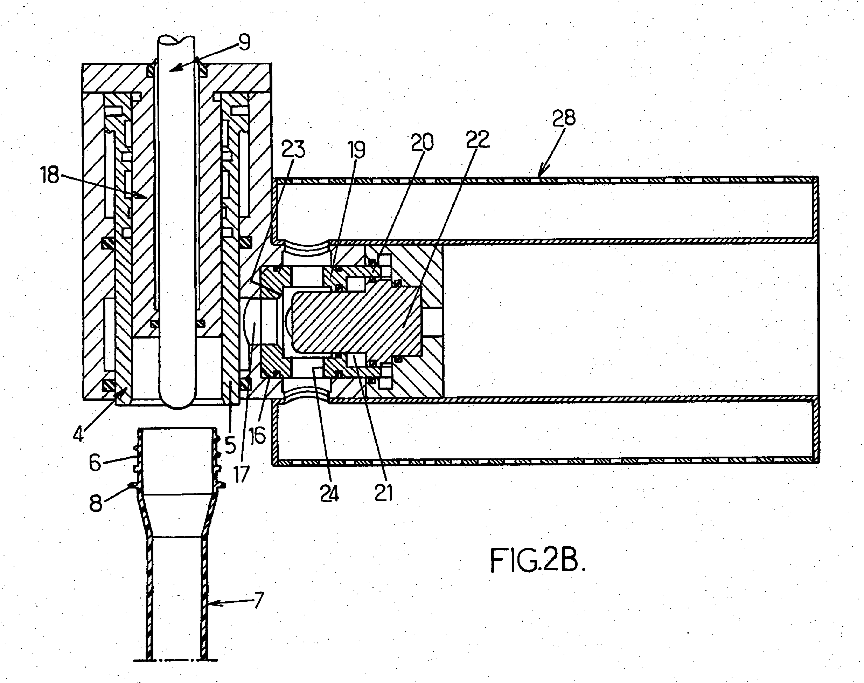

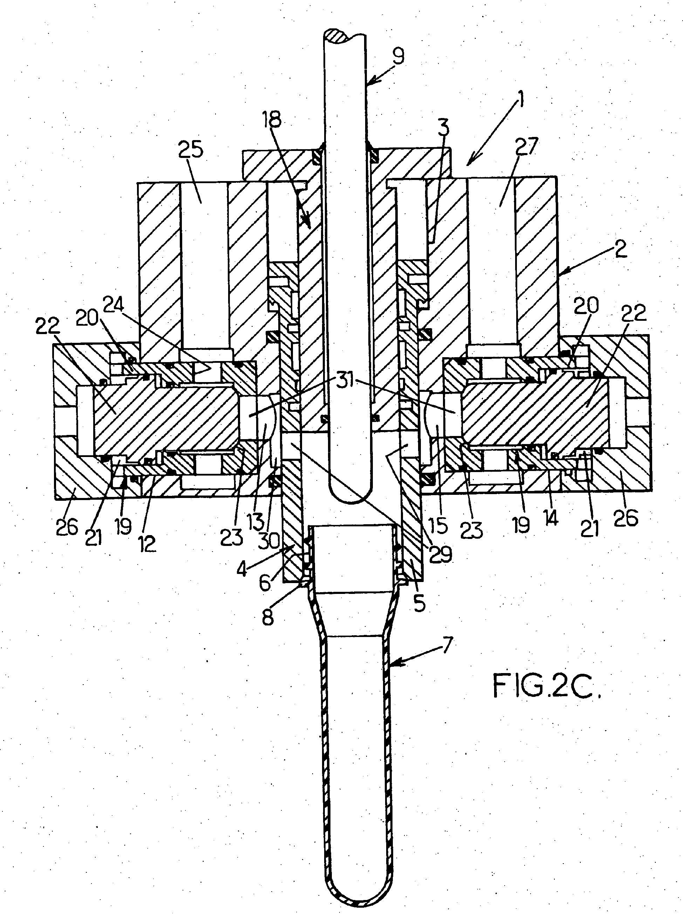

Les figures 2A, 2B et 2C illustrent un mode de réalisation concret mettant en oeuvre une variante des dispositions de la figure 1. Dans ce mode de réalisation concret, les logements 12, 14 (figure 2A) et 16 (figure 2B) sont disposés radialement autour de l'alésage 3, de sorte que le corps 2 peut être réalisé sous une forme beaucoup plus compacte en direction axiale. En outre la fabrication du corps est simplifiée et l'accès aux électrovannes pour l'entretien est plus facile.

Les figures 2A, 2B et 2C font clairement apparaître les moyens de guidage, solidaires du corps 2, de la tige d'élongation qui comportent une pièce tubulaire de guidage 18 interposée entre la tige d'élongation 9 qui lui est intérieure et la tuyère 4 mobile qui lui est extérieure.

Le logement 12 qui s'étend radialement à la base du corps 2 abrite une électrovanne-cartouche 19. L'électrovanne-cartouche 19 comporte un boîtier 20 définissant une chambre 21 abritant un noyau mobile 22 ou piston. Le boîtier 20 définit, dans la chambre 21, un siège 23 propre à recevoir en appui étanche la tête du noyau mobile 22 formant clapet. La paroi du boîtier 20 est percée d'au moins une lumière 24 en communication avec un conduit 25 d'amenée du fluide de présoufflage sous moyenne pression, lequel conduit 25 traverse le corps 2 sensiblement parallèlement à l'alésage 3.

Un capot 26 de fermeture du boîtier 20 de l'électrovanne est fixé sur la paroi du corps 2. Le dispositif de pilotage (non représenté sur ces figures), généralement de type pneumatique, peut être monté sur ce capot 26.

Le boîtier 20 de l'électrovanne-cartouche 19 comporte, à son extrémité tournée radialement vers l'intérieur, un perçage aligné avec le susdit conduit radial 13 respectif percé dans le fond du logement 12 et débouchant dans l'alésage 3, l'ensemble de ces deux perçages alignés constituant un conduit radial désigné dans son ensemble par la référence 31.

Le logement 14 qui s'étend radialement en regard du logement 12 en étant diamétralement opposé à celui-ci abrite une électrovanne-cartouche identique, avec un agencement identique à celui décrit ci-dessus, en relation avec un conduit 27 d'amenée de fluide de soufflage sous haute pression.

Le logement 16 (figure 2B), qui s'étend radialement en étant décalé de 90° par rapport aux logements 12 et 14 précités, abrite une électrovanne-cartouche identique, avec un agencement identique à celui décrit plus haut, à ceci près que la chambre 21 de l'électrovanne-cartouche est montrée (à titre d'exemple) en liaison avec un dispositif de silencieux 28 ; les lumières 24 de communication peuvent ici avoir une section plus importante et/ou être en nombre plus élevé. Le dispositif de silencieux 28 est représenté sous forme d'un élément tubulaire à double paroi définissant une chambre annulaire allongée. Ledit élément tubulaire est emboîté sur une partie cylindrique saillante du corps 2 définissant le logement 16 ; sa paroi extérieure est percée d'une multiplicité de trous d'échappement. Le dispositif de pilotage de l'électrovanne (non montré) peut être monté sur le corps 2 à l'intérieur du dispositif de silencieux 28, ou bien être monté à l'extrémité libre du dispositif de silencieux.

Aux figures 2A et 2B, l'installation 1 de soufflage est illustrée en position non fonctionnelle, les électrovannes de présoufflage (logement 12) et de soufflage (logement 14) étant fermées et l'électrovanne d'échappement (logement 16) étant ouverte, la tuyère 4 mobile et la tige d'élongation 9 étant rétractées. A la figure 2C (qui est une vue analogue à celle de la figure 2A), l'installation 1 de soufflage est montrée dans une position préliminaire, prête pour le présoufflage, mais l'électrovanne de présoufflage (logement 12) non encore activée. Dans cette position préliminaire, seule la tuyère 4 mobile a été activée et amenée en position sur le col 6 de l'ébauche 7 qu'elle coiffe de façon étanche en étant en appui contre la collerette 8. Dans cette position, des lumières radiales 29, distribuées sur le pourtour de la tuyère 4 mobile, sont découvertes par la pièce tubulaire de guidage 18 des moyens de guidage et établissent une liaison entre le volume défini par l'ébauche 7 et l'extrémité inférieure de la tuyère 4 mobile, d'une part, et, d'autre part, un lamage annulaire 30 qui est pratiqué dans la face de l'alésage 3 et dans lequel débouchent les conduits 31 de communication avec les trois électrovannes respectives.

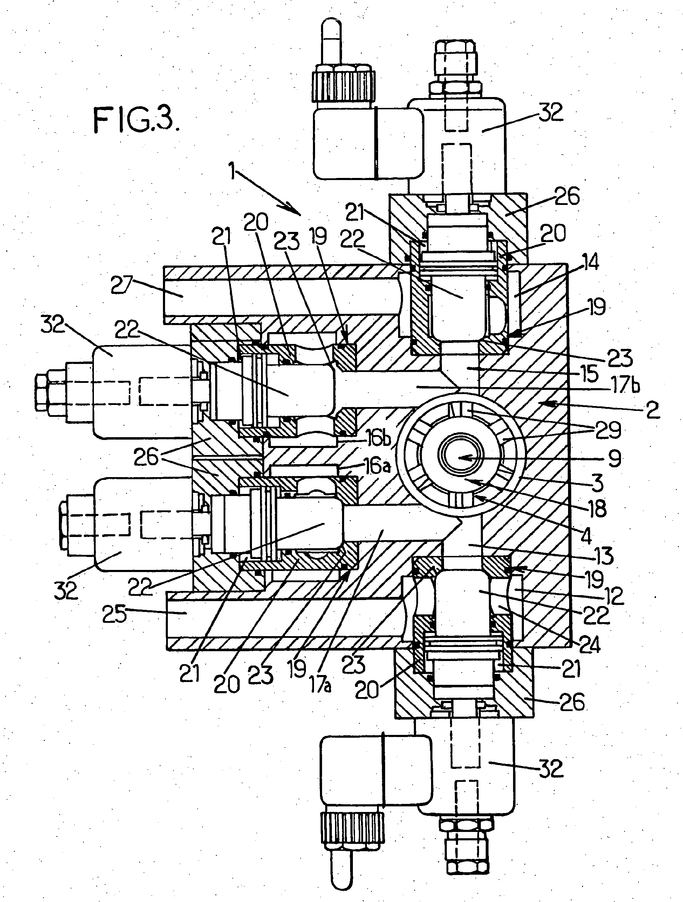

A la figure 3 est illustré, en vue de dessus, une variante de réalisation concrète de l'installation 1 de soufflage des figures 2A-2C. La conception d'ensemble reste sensiblement analogue à celle décrite plus haut (les dispositifs 32 de pilotage étant ici illustrés en position sur les capots 26 des électrovannes), à ceci près toutefois qu'il est prévu une électrovanne supplémentaire pour le recyclage du fluide sous pression résiduelle à l'issue de l'étape de soufflage, en lieu et place de l'électrovanne unique d'échappement illustrée à la figure 2B. A cet effet, le corps 2 comporte deux logements 16a, 16b parallèles réunis respectivement par deux conduits 17a, 17b respectifs non plus directement à l'alésage 3, mais aux conduits radiaux 13 et 15, respectivement, associés aux logements 12 et 14.

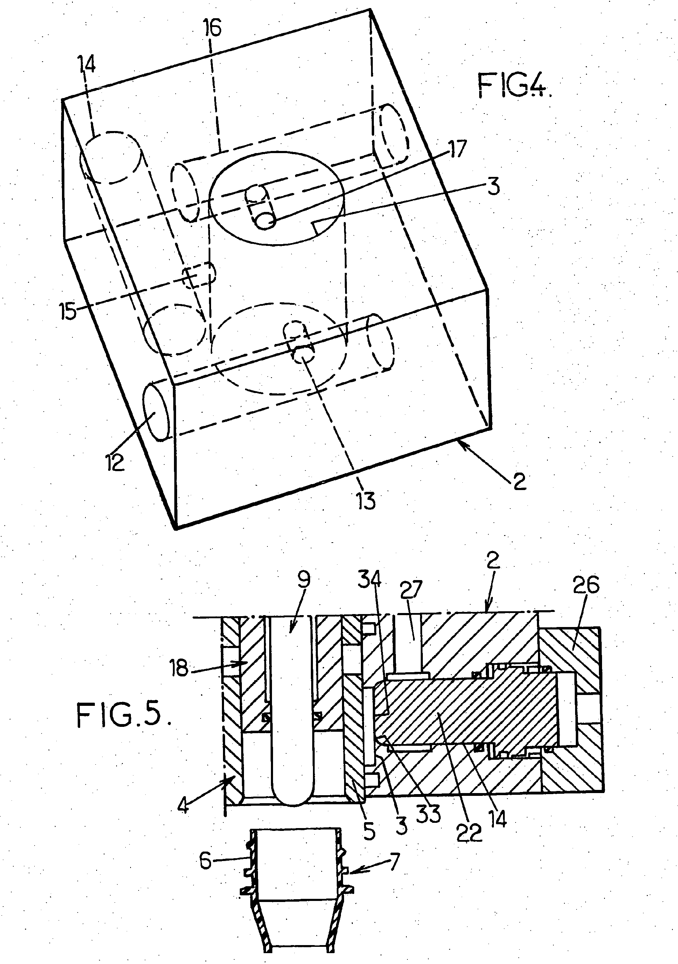

A la figure 4 est illustrée, de façon très schématique, une autre variante de réalisation d'une installation de soufflage mettant en oeuvre les dispositions conformes à l'invention. Sur cette figure 4, on a représenté uniquement le corps 2 avec l'alésage 3, ainsi que trois logements 12, 14, 16 qui sont mis en communication avec l'alésage 3 par des conduits radiaux respectifs 13, 15 et 17 et qui sont destinés à abriter les électrovannes de présoufflage, de soufflage et d'échappement respectivement. Cette variante de réalisation se distingue de celle de la figure 1 par la disposition des logements 12, 14 et 16 qui ne sont pas parallèles à l'alésage 3, mais qui sont transversaux à celui-ci et se distingue aussi de celles des figures 2A-2C et 3 par le fait que les logements ne sont pas radiaux, mais décalés latéralement à l'alésage 3. Cette disposition, comme celles des figures 2A-2C et 3, permet de réduire la hauteur du corps 2 de façon notable et maintient l'alésage 3 en position centrale dans le corps. Si nécessaire, un quatrième logement peut être prévu pour une électrovanne de recyclage ; toutefois, cet agencement nécessite de disposer d'un libre accès aux quatre côtés du corps 2, ce qui peut ne pas être possible dans certaines configurations d'installation.

Un intérêt de cette configuration compacte réside dans le fait qu'elle peut être mise en oeuvre non pas dans le corps supportant la tuyère 4 mobile, mais directement dans l'extrémité en forme de cloche d'une tuyère-cloche (type de tuyère illustré à la figure 1 du document FR 2 764 544) : le corps 2 montré à la figure 4 est alors le corps de la cloche aménagé conformément à l'invention.

Les dispositions conformes à l'invention conduisent à une réduction très notable du volume mort, et donc à une réduction très importante du volume de fluide sous pression nécessaire au présoufflage/soufflage d'un récipient. Pour fixer les idées, dans une installation classique de soufflage présentant un volume mort de l'ordre de 186 cm³, la mise en oeuvre d'électrovannes intégrées dans le corps de l'installation de soufflage peut permettre d'envisager de ramener le volume mort à environ 18 cm³, soit un gain tout à fait remarquable de 168 cm³.

Si l'on considère l'agencement montré à la figure 2A avec chaque électrovanne disposée radialement par rapport à l'alésage 3 central, il est possible de réduire encore plus le volume mort constitué par le conduit 31 formant la communication à travers la paroi latérale du corps définissant l'alésage 3 et la paroi de bout du boîtier 20 de l'électrovanne. A la figure 5 est reprise seulement une partie (partie située à gauche) de la figure 2A, montrant une seule électrovanne, avec cette différence que le noyau mobile 22 est ici monté directement dans le logement 14 usiné à cet effet, selon une conformation évoquée plus haut. Dans ce cas, le bord chanfreiné conique de la face frontale 34 du noyau mobile 22 coopère avec un siège 33 annulaire tronconique qui est formé à l'extrémité, tournée vers l'intérieur, du logement 14 en étant usiné directement dans le corps 2. La conicité du siège 33 peut alors être telle que la face frontale 34 du piston affleure la paroi latérale de l'alésage 3. Cette face frontale 34 peut de préférence être incurvée de manière à être dans la continuité de ladite paroi latérale de l'alésage 3. Le conduit 27 peut alors déboucher aussi près que possible du siège 33, de sorte que, grâce à cet agencement, le volume mort en aval du noyau mobile 22, entre le conduit 27 et l'alésage 3, peut être réduit de façon très significative.

## Revendications

1. Installation (1) de fabrication de récipients en matériau thermoplastique par soufflage, à l'aide d'un fluide sous pression, d'ébauches (7) dont le corps est enfermé dans un moule de soufflage, ladite installation (1) comportant une tuyère (4) comprenant une extrémité (5) conformée pour être mise en relation fonctionnelle étanche avec le col (6) d'une ébauche (7) et comportant plusieurs électrovannes pour la mise en liaison sélective de ladite tuyère (4) avec respectivement une source de fluide sous moyenne pression pour le présoufflage, une source de fluide sous haute pression pour le soufflage et un échappement pour évacuer le fluide de présoufflage/soufflage, **caractérisée en ce qu'**un corps associé mécaniquement à la tuyère incorpore au moins un logement (12, 14, 16) qui est propre à abriter une électrovanne et qui est sélectivement en communication (13, 15, 17) avec la tuyère (4), et **en ce que** chaque logement (12, 14, 16) est conformé pour recevoir une électrovanne-cartouche (19) respective.

2. Installation selon la revendication 1, **caractérisée en ce que** c'est le corps (2) supportant la tuyère (4) qui est pourvu du susdit logement (12, 14, 16).

3. Installation selon la revendication 1 dans laquelle la tuyère se termine inférieurement par une partie terminale en cloche, **caractérisée en ce que** c'est le corps de la cloche terminant la tuyère (4) qui est agencé avec le logement (12, 14, 16).

4. Installation selon l'une quelconque des revendications 1 à 3, **caractérisée en ce que** le logement (12, 14, 16) s'étend parallèlement à l'axe de la tuyère à partir de la face supérieure du corps (2).

5. Installation selon l'une quelconque des revendications 1 à 3, **caractérisée en ce que** le logement (12, 14, 16) s'étend radialement à partir de la tuyère (4).

6. Installation selon l'une quelconque des revendications 1 à 3, **caractérisée en ce que** le logement (12, 14, 16) s'étend transversalement à la tuyère (4), en étant décalé latéralement par rapport à un alésage (3) abritant celle-ci.

7. Installation selon l'une quelconque des revendications précédentes, **caractérisée en ce que** le dispositif (32) de pilotage de l'électrovanne-cartouche (19) est monté extérieurement au logement (12, 14, 16).

8. Installation selon la revendication 7, **caractérisée en ce qu'**elle comporte une électrovanne d'échappement associée à un dispositif (28) faisant office de silencieux.

9. Installation selon l'une quelconque des revendications 1 à 8 **caractérisée en ce qu'**elle est équipée d'au moins deux électrovannes associées respectivement à un circuit de recyclage du fluide sous pression sous pression résiduelle issu du soufflage et à un échappement et **en ce que** le corps de tuyère est pourvu de quatre logements pour respectivement ces quatre électrovannes.

10. Installation selon la revendication 5 et l'une quelconque des revendications précédentes, **caractérisée en ce qu'**au moins les électrovannes de présoufflage et de soufflage et les logements respectifs de celles-ci sont agencés de manière telle qu'en position de fermeture les clapets respectifs desdites électrovannes ont leurs faces frontales respectives qui affleurent la paroi intérieure de la tuyère.

## Patentansprüche

1. Anlage (1) zur Herstellung von Behältern aus thermoplastischem Material durch Blasformen von Rohlingen (7) mit Hilfe eines Druckfluids, deren Körper in eine Blasform eingeschlossen ist, wobei die Anlage (1) ein Rohr (4) besitzt, umfassend ein Ende (5), das derart ausgeführt ist, dass es mit dem Hals (6) eines Rohlings (7) in eine dichte Funktionsverbindung gebracht werden kann, und umfassend mehrere Magnetventile für die Herstellung einer selektiven Verbindung zwischen dem Rohr (4) und einer Fluidquelle unter mittlerem Druck für das Vorblasformen, einer Fluidquelle unter hohem Druck für das Blasformen bzw. einer Ableitung, um das Fluid des Vorblasformens/Blasformens abzuleiten, **dadurch gekennzeichnet, dass** ein mechanisch mit dem Rohr verbundener Körper mindestens eine Lagerung (12, 14, 16) umfasst, die geeignet ist, ein Magnetventil aufzunehmen, und die selektiv mit dem Rohr (4) in Verbindung steht (13, 15, 17), und dass jede Lagerung (12, 14, 16) derart ausgeführt ist, dass sie eine jeweilige Magnetventilkartusche (19) aufnimmt.

2. Anlage nach Anspruch 1, **dadurch gekennzeichnet, dass** der Körper (2), der das Rohr (4) trägt, mit der Lagerung (12, 14, 16) versehen ist.

3. Anlage nach Anspruch 1, bei der das Rohr unten mit einem glockenförmigen Endteil endet, **dadurch gekennzeichnet, dass** der Körper der Glocke, der das Rohr (4) beendet, mit der Lagerung (12, 14, 16) angeordnet ist.

4. Anlage nach einem der Ansprüche 1 bis 3, **dadurch gekennzeichnet, dass** sich die Lagerung (12, 14, 16) parallel zur Achse des Rohrs von der Oberseite des Körpers (2) aus erstreckt.

5. Anlage nach einem der Ansprüche 1 bis 3, **dadurch gekennzeichnet, dass** sich die Lagerung (12, 14, 16) radial zum Rohr (4) aus erstreckt.

6. Anlage nach einem der Ansprüche 1 bis 3, **dadurch gekennzeichnet, dass** sich die Lagerung (12, 14, 16) quer zum Rohr (4) erstreckt, wobei sie seitlich in Bezug zu einer dieses aufnehmenden Bohrung (3) versetzt ist.

7. Anlage nach einem der vorhergehenden Ansprüche, **dadurch gekennzeichnet, dass** die Vorrichtung (32) zur Steuerung der Magnetventilkartusche (19) außen an der Lagerung (12, 14, 16) montiert ist.

8. Anlage nach Anspruch 7, **dadurch gekennzeichnet, dass** sie ein mit der Vorrichtung (28) verbundenes Ableitungsmagnetventil umfasst, das als Schalldämpfer dient.

9. Anlage nach einem der Ansprüche 1 bis 8, **dadurch gekennzeichnet, dass** sie mit mindestens zwei Magnetventilen ausgestattet ist, die mit einem Recyclingzyklus des aus den Blasformen kommenden unter Restdruck stehenden Druckfluids, bzw. einer Ableitung verbunden sind, und dass der Rohrkörper mit vier Lagerungen jeweils für diese vier Magnetventile versehen ist.

10. Anlage nach Anspruch 5 und einem der vorhergehenden Ansprüche, **dadurch gekennzeichnet, dass** mindestens die Magnetventile des Vorblasformens und des Blasformens und die jeweiligen Lagerungen derselben derart angeordnet sind, dass in geschlossener Position die jeweiligen Klappen der Magnetventile mit ihren jeweiligen Vorderseiten an der Innenwand des Rohrs anliegen.

## Claims

1. A device (1) for blowing, by means of a pressurized fluid, containers from thermoplastic blanks (7) of which the body is enclosed in a blowing mold, said device (1) comprising a nozzle (4) consisting of an end (5) formed to be functionally and sealingly connected to the neck (6) of a blank (7) and comprising a plurality of solenoid valves for selectively connecting said nozzle (4) to, respectively, a source of fluid at moderate pressure for pre-blowing, a source of fluid at high pressure for blowing and an exhaust for discharging the pre-blowing/blowing fluid, **characterized in that** a body associated mechanically with the nozzle incorporates at least one housing (12, 14, 16) which is adapted to accommodate a solenoid valve and which is selectively in communication (13, 15, 17) with the nozzle (4) and **in that** each housing (12, 14, 16) is formed to receive a respective solenoid valve cartridge (19).

2. The device as claimed in claim 1, **characterized in that** it is the body (2) supporting the nozzle (4) which is provided with said housing (12, 14, 16).

3. The device as claimed in claim 1 in which the nozzle is terminated below by a bell-shaped end part, **characterized in that** it is the body of the bell terminating the nozzle (4) which is designed with the housing (12, 14, 16).

4. The device as claimed in any one of claims 1 to 3, **characterized in that** the housing (12, 14, 16) extends parallel to the axis of the nozzle from the upper face of the body (2).

5. The device as claimed in any one of claims 1 to 3, **characterized in that** the housing (12, 14, 16) extends radially from the nozzle (4).

6. The device as claimed in any one of claims 1 to 3, **characterized in that** the housing (12, 14, 16) extends transversely to the nozzle (4) by being offset laterally relative to a bore (3) accommodating said nozzle.

7. The device according to any one of the preceding claims, **characterized in that** the device (32) for controlling the solenoid valve cartridge (19) is mounted outside the housing (12, 14, 16).

8. The device as claimed in claim 7, **characterized in that** it comprises an exhaust solenoid valve associated with a device (28) acting as a silencer.

9. The device as claimed in any one of claims 1 to 8, **characterized in that** it is equipped with at least two solenoid valves associated respectively with a circuit for recycling pressurized fluid at residual pressure, as a result of the blowing, and with an exhaust and **in that** the nozzle body is provided with four housings for these four respective solenoid valves.

10. The device as claimed in claim 5 and any one of the preceding claims, **characterized in that** at least the pre-blowing and blowing solenoid valves and the respective housings thereof are designed such that in the closed position the respective front faces of the respective valve members of said solenoid valves are flush with the inner wall of the nozzle.
